# EUROPEAN PATENT SPECIFICATION

(11) **EP 2 215 821 B1**
(45) Date of publication and mention of the grant of the patent: **12.08.2015**
(21) Application number: 08854999.3
(22) Date of filing: 01.12.2008
(51) Int. Cl.: H04M 19/04, H04M 1/725

(54) **METHOD AND APPARATUS FOR ALERT CONTROL**
VERFAHREN UND VORRICHTUNG ZUR ALARMSTEUERUNG
PROCÉDÉ ET APPAREIL POUR UNE COMMANDE D'ALERTE

(30) Priority: 30.11.2007 US 948642
(43) Date of publication of application: 11.08.2010
(73) Proprietor: Nokia Technologies Oy, 02610 Espoo (FI)
(72) Inventor: NIELSEN, Peter Dam, DK-2800 Kgs Lyngby (DK); KRAFT, Christian Rossing, DK-1814 Frederiksberg (DK)
(74) Representative: Swindell & Pearson Limited
(86) International application number: PCT/IB2008/003297
(87) International publication number: WO 2009/068986

(56) References cited:
- WO-A-2004/008411
- WO-A-2006/057770
- US-A1- 2002 010 008
- US-A1- 2004 127 198
- US-A1- 2005 255 826
- US-A1- 2006 153 358

## Description

### TECHNICAL FIELD

This application relates generally to a method and apparatus for alert control.

### BACKGROUND

The modern era of electronic devices has seen a dramatic increase in the number of electronic devices used by individuals. These devices are experiencing an unprecedented growth in consumer demand. As they become more prevalent, these devices are being used by individuals in various environments which may have environmental conditions which impact the utilization of these devices.

US 2004/0127198 discloses techniques to automatically change the notification mode used by a mobile communications device to alert a user of an incoming communication to the mobile communications device. The notification mode is changed in response to a detected environmental condition. The mobile communications device monitors one or more environmental conditions, such as motion, light, sound, and heat, and compares the detected level of each environmental condition to a predetermined threshold. In response to the comparison result, the mobile communications device automatically adjusts the notification mode used to alert a user to an incoming communication.

### SUMMARY

The present invention is as set out in the independent claims.

In accordance with an embodiment of the present invention, a method as in claim 1 is disclosed.

In accordance with another embodiment of the present invention, an apparatus, as in claim 20 is disclosed.

In accordance with another embodiment of the present invention, a computer program product as in claim 21 is disclosed.

### BRIEF DESCRIPTION OF THE DRAWINGS

For a more complete understanding of embodiments of the present invention, the objects and advantages thereof, reference is now made to the following descriptions taken in connection with the accompanying drawings in which:
FIGURE 1 is a block diagram of an electronic device according to an exemplary embodiment of the present invention;
FIGURE 2 is a flow chart of a method for event alert according to an exemplary embodiment of the present invention;
FIGURE 3 is a block diagram of an environment monitoring system according to an exemplary embodiment of the present invention;
FIGURE 4A is a timing diagram for continuous environment monitoring according to an exemplary embodiment of the present invention;
FIGURE 4B is a timing diagram for discontinuous environment monitoring according to an exemplary embodiment of the present invention;
FIGURE 5 is a timing diagram of event storage according to an exemplary embodiment of the present invention;
FIGURE 6 is a flow chart of a method for storing events according to an exemplary embodiment of the present invention;
FIGURE 7 is a timing diagram of an event storage mode related to receiving an event according to an exemplary embodiment of the present invention;
FIGURE 8A is a timing diagram of an event storage mode related to a user handling an alert according to an exemplary embodiment of the present invention; and
FIGURE 8B is a timing diagram illustrating operation of an event storage mode related to more than one period of environmental unfavorableness according to an exemplary embodiment of the present invention.

### DETAILED DESCRIPTON OF THE DRAWINGS

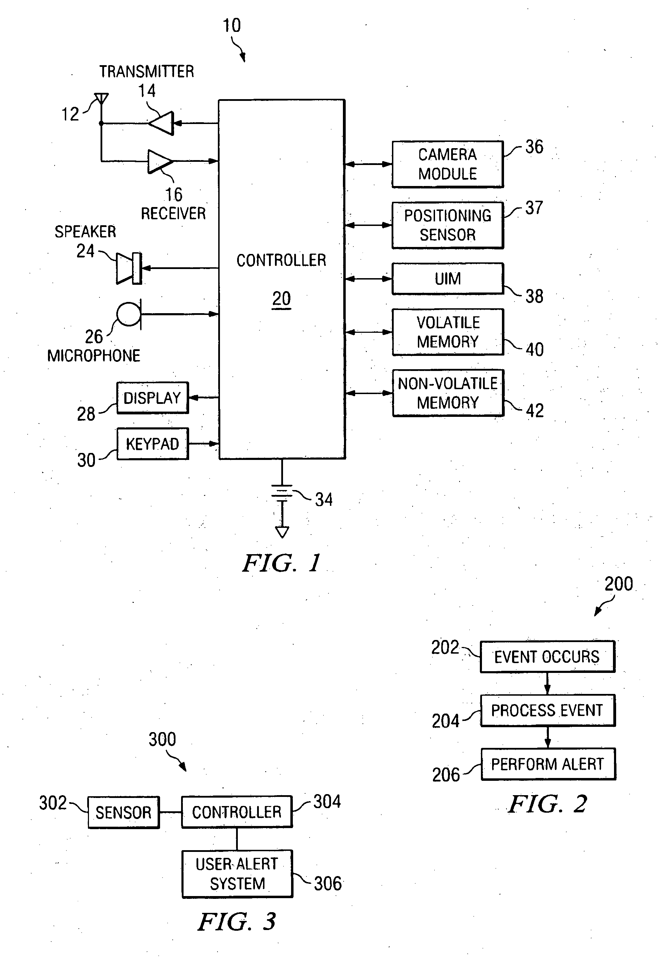

The preferred embodiment of the present invention and its advantages are best understood by referring to FIGURES 1 through 8B of the drawings, like numerals being used for like and corresponding parts of the various drawings.

Embodiments of the present invention will now be described more fully hereinafter with reference to the accompanying drawings, in which some, but not all embodiments of the invention are shown. Indeed, embodiments of the invention may be embodied in many different forms and should not be construed as limited to the embodiments set forth herein; rather, these embodiments are provided so that this disclosure will satisfy applicable legal requirements.

FIGURE 1 is a block diagram of an electronic device, for example, mobile terminal 10, according to an exemplary embodiment of the present invention. It should be understood, however, that a mobile terminal as illustrated and hereinafter described is merely illustrative of an electronic device that would benefit from embodiments of the present invention and, therefore, should not be taken to limit the scope of the present invention. While one embodiment of the mobile terminal 10 is illustrated and will be hereinafter described for purposes of example, other types of electronic devices, such as, but not limited to, portable digital assistants (PDAs), pagers, mobile computers, desktop computers, televisions, gaming devices, laptop computers, cameras, video recorders, GPS devices and other types of electronic systems, may readily employ embodiments of the present invention. Furthermore, devices may readily employ embodiments of the present invention regardless of their intent to provide mobility.

Embodiments of the present invention will be primarily described below in conjunction with mobile communications applications. However, it should be understood that embodiments of the present invention may be utilized in conjunction with a variety of other applications, both in the mobile communications industries and outside of the mobile communications industries.

The mobile terminal 10 comprises an antenna 12 (or multiple antennae) in operable communication with a transmitter 14 and a receiver 16. The mobile terminal 10 further comprises a controller 20 or other processing element that provides signals to and receives signals from the transmitter 14 and receiver 16, respectively. The signals comprise signaling information in accordance with the air interface standard of the applicable cellular system, and also user speech, received data and/or user generated data. In this regard, the mobile terminal 10 may operate with one or more air interface standards, communication protocols, modulation types, and access types. By way of illustration, the mobile terminal 10 may operate in accordance with any of a number of first, second, third and/or fourth-generation communication protocols or the like. For example, the mobile terminal 10 may operate in accordance with second-generation (2G) wireless communication protocols IS-136 (TDMA), GSM, and IS-95 (CDMA), or with third-generation (3G) wireless communication protocols, such as UMTS, CDMA2000, WCDMA and TD-SCDMA, with fourth-generation (4G) wireless communication protocols, and/or the like.

It is understood that the controller 20 comprises circuitry desirable for implementing audio and logic functions of the mobile terminal 10. For example, the controller 20 may comprise a digital signal processor device, a microprocessor device, various analog to digital converters, digital to analog converters, and for other support circuits. Control and signal processing functions of the mobile terminal 10 are allocated between these devices according to their respective capabilities. The controller 20 thus may also comprise the functionality to convolutionally encode and interleave message and data prior to modulation and transmission. The controller 20 may additionally comprise an internal voice coder, and may comprise an internal data modem. Further, the controller 20 may comprise functionality to operate one or more software programs, which may be stored in memory. For example, the controller 20 may operate a connectivity program, such as a conventional Web browser. The connectivity program may then allow the mobile terminal 10 to transmit and receive Web content, such as location-based content and/or other web page content, according to a Wireless Application Protocol (WAP), Hypertext Transfer Protocol (HTTP), and/or the like, for example.

The mobile terminal 10 may also comprise a user interface including an output device such as a ringer, a conventional earphone and/or speaker 24, a microphone 26, a display 28, and/or a user input interface, which are coupled to the controller 20. The user input interface, which allows the mobile terminal 10 to receive data, may comprise any of a number of devices allowing the mobile terminal 10 to receive data, such as a keypad 30, a touch display (not shown) or other input device. In embodiments including the keypad 30, the keypad 30 may comprise the conventional numeric (0-9) and related keys (#, *), and other keys used for operating the mobile terminal 10. Alternatively, the keypad 30 may comprise a conventional QWERTY keypad arrangement. The keypad 30 may also comprise various soft keys with associated functions. In addition, or alternatively, the mobile terminal 10 may comprise an interface device such as a joystick or other user input interface. The mobile terminal 10 further comprises a battery 34, such as a vibrating battery pack, for powering various circuits that are required to operate the mobile terminal 10, as well as optionally providing mechanical vibration as a detectable output.

In an exemplary embodiment, the mobile terminal 10 comprises a media capturing element, such as a camera, video and/or audio module, in communication with the controller 20. The media capturing element may be any means for capturing an image, video and/or audio for storage, display or transmission. For example, in an exemplary embodiment in which the media capturing element is a camera module 36, the camera module 36 may comprise a digital camera which may form a digital image file from a captured image. As such, the camera module 36 comprises hardware, such as a lens or other optical component(s), and/or software necessary for creating a digital image file from a captured image. Alternatively, the camera module 36 may comprise only the hardware for viewing an image, while a memory device of the mobile terminal 10 stores instructions for execution by the controller 20 in the form of software for creating a digital image file from a captured image. In an exemplary embodiment, the camera module 36 may further comprise a processing element such as a co-processor which assists the controller 20 in processing image data and an encoder and/or decoder for compressing and/or decompressing image data. The encoder and/or decoder may encode and/or decode according to a standard format, for example, a JPEG standard format.

The mobile terminal 10 may further comprise a user identity module (UIM) 38. The UIM 38 may be a memory device having a built in processor. The UIM 38 may comprise, for example, a subscriber identity module (SIM), a universal integrated circuit card (UICC), a universal subscriber identity module (USIM), a removable user identity module (R-UIM), and/or the like. The UIM 38 may store information elements related to a mobile subscriber. In addition to the UIM 38, the mobile terminal 10 may be equipped with memory. For example, the mobile terminal 10 may comprise volatile memory 40, such as volatile Random Access Memory (RAM) including a cache area for the temporary storage of data. The mobile terminal 10 may also comprise other memory, for example, non-volatile memory 42, which may be embedded and/or may be removable. The non-volatile memory 42 may additionally or alternatively comprise an EEPROM, flash memory or the like, such as that available from the SanDisk Corporation of Sunnyvale, California, or Lexar Media Inc. of Fremont, California. The memories may store any of a number of pieces of information, and data, used by the mobile terminal 10 to implement the functions of the mobile terminal 10. For example, the memories may comprise an identifier, such as an international mobile equipment identification (IMEI) code, which may uniquely identify the mobile terminal 10.

Although FIGURE 1 illustrates an example of a mobile terminal which may utilize embodiments of the present invention, it should be understood that the mobile terminal 10 of FIGURE 1 is merely an exemplary device that may utilize embodiments of the present invention. Generally speaking, any device having a processing element for managing timer operations may utilize embodiments of the present invention. In this regard, for example, such a device may also comprise or otherwise be in communication with a memory device and may also comprise some form of user interface. For example, such devices could be, but are not limited to, portable digital assistants (PDAs), pagers, mobile computers, desktop computers, televisions, gaming devices, laptop computers, cameras, video recorders, GPS devices and other types of electronic systems. A processing element such as those described above may be embodied in many ways. For example, the processing element may be embodied as a processor, a coprocessor, a controller or various other processing means or devices including integrated circuits such as, for example, an ASIC (application specific integrated circuit), FPGA (field programmable gate array), and/or the like.

During the operation of a device, for example mobile terminal 10, there may be events occurring where it is desirable to alert a user of the event. Such events may comprise for example, receiving a phone call, receiving a message, receiving a voice mail notification, receiving an email, a calendar alarm, an alarm clock notification, and/or the like.

FIGURE 2 is a flow chart of a method 200 for event alert according to an exemplary embodiment of the present invention. It should be understood, however, that the event alert method of FIGURE 2 as illustrated and hereinafter described is merely illustrative of an event alert method which may be employed to inform a user of an event, and therefore, should not be taken to limit the scope of the present invention.

In an exemplary embodiment, at block 202, an event occurs. In an exemplary embodiment, the event occurs in an electronic device, for example mobile terminal 10. The event may comprise: receiving a phone call, receiving a message, receiving a voice mail notification, receiving an email, generating a calendar alarm, generating an alarm clock notification, and/or the like. It should be understood that there are many ways in which an event may be received. For example, an event may be generated in the device, such as, a calendar event, an alarm clock event, and/or the like. In another example, the device may have an event communicated to it, such as, receiving a phone call, receiving a message, receiving a voice mail notification, receiving an email, and/or the like.

In an exemplary embodiment, at block 204, the event is processed. Processing the event may comprise performing one or more operations, for example, storing data, updating state information, initiating communication processes, and/or the like. For example, when a message event is received, there may be operations to set up communications to receive the message, operations to store the message, and/or the like.

In an exemplary embodiment, at block 206, an alert is performed. An alert may comprise an audio signal, a visual signal, a tactile signal, and/or the like. An example of an audio signal may be a ring tone, a song, a beep, and/or the like. An example of a visual signal may be an image, a video, a text display, a light, and/or the like. An example of a tactile signal may be vibration, movement, heating, and/or the like.

FIGURE 3 is a block diagram of an environment monitoring system 300 according to an exemplary embodiment of the present invention. It should be understood, however, that the environment monitoring system of FIGURE 3 as illustrated and hereinafter described is merely illustrative of one environment monitoring system which may be employed to inform a user of an event, and therefore, should not be taken to limit the scope of the present invention.

An environment monitoring system, for example environment monitoring system 300 of FIGURE 3, may evaluate different environmental factors that may interfere with a user's ability to perceive an alert from a device, for example, mobile terminal 10 of FIGURE 1. These environmental factors may comprise sound environment around the device, location of the device, motion of the device, proximity of the user to the device, visual environment around the device, and/or the like.

In an exemplary embodiment, an event monitoring system 300 comprises a controller 304 coupled with a sensor 302 and a user alert module 306. Sensor 302 receives input from an environment around a device, for example, mobile terminal 10 of FIGURE 1. It should be understood that sensor 302 may comprise one or more of: a microphone, a proximity sensor, a position sensor, a motion sensor, a heat sensor, and/or the like. If desired, the sensor 302 may comprise an input device, a processing element, an integrated portion of another system, and/or the like. For example, a position sensor may comprise a signal receiving element, a processing element, a communication element, and/or the like. In this example, the elements of the position sensor may generate position information of the device.

In an exemplary embodiment, controller 304 may comprise a processing element to evaluate the information provided by the sensor 302. For example, if controller 304 receives sound information, controller 304 may evaluate the received sound information to determine whether the sound environment around the device is favorable to a user perceiving an audio alert signal. It should be understood that controller 304 may comprise one or more elements to evaluate information from one or more sensors 302. For example, a device may evaluate sound and motion information, for example to evaluate an action to be taken in response to receiving an event. In this example, controller 304 may comprise one or more elements to evaluate sound information and at least one different element to evaluate motion information. However, in the same example a controller may comprise one or more elements to evaluate both sound information and motion information.

In an exemplary embodiment, user alert module 306 receives information from controller 304. It should be understood that user alert system 306 may perform a method, such as at least part of the method 200 for event alert of FIGURE 2. Alert module 306 may comprise at least a portion of an electronic device, for example mobile terminal 10 in FIGURE 1. Although the sensor 302 and controller 304 are shown as distinct elements in FIGURE 3, it should be understood that the sensor and/or controller may be part of the same system and/or module, for example an alert module 306, and therefore may not be separate elements. For example, a mobile terminal 10 of FIGURE 1 may utilize a microphone 26 as a sound environment sensor 302 in addition to other operations. Likewise, controller 20 of FIGURE 1 may operate as controller 304 as well as other roles in the mobile terminal 10 of FIGURE 1.

In an exemplary embodiment, a user may be in a noisy environment, such as a music concert, an airport, a sports event, and/or the like. In such an example, noise in the environment around a device, for example, mobile terminal 10 of FIGURE 1, may interfere with the user's ability to perceive an audio alert. In this exemplary embodiment, an environment monitoring system, for example environment monitoring system 300 of FIGURE 3, may evaluate sound environment around the device and determine that the sound environment is too noisy to be favorable to a user perceiving an alert. Therefore, it may be desired to alert the user when noise around the device is reduced. In this exemplary embodiment, the device may alert at the time of the event, provide some other form of alert in addition to or in place of the audio alert, or may not alert at the time of the event.

In another exemplary embodiment, a user may be in a location where it is undesirable to perceive an alert, such as a church, a movie theater, and/or the like. Therefore, the location of a device, for example, mobile terminal 10 of FIGURE 1, makes it undesirable for the alert to be perceived. In this exemplary embodiment, an environment monitoring system, for example environment monitoring system 300 of FIGURE 3, may evaluate the position of the device and determine that the location of the device is inappropriate to be favorable to a user desiring an alert. Therefore, an alert may be suppressed until the user leaves such an area, where the alert may be provided or performed.

In yet another exemplary embodiment, a user may have left a device, for example, mobile terminal 10 of FIGURE 1, where the user may not be able to perceive an alert from the device, for example, in a car, in a suitcase, in a different room than the user, and/or the like. In such a situation, a lack of sound, lack of user proximity sensing, and/or the like, in the environment around the device may be indicative of the user's inability to perceive an alert due to lack of proximity to the device. In this exemplary embodiment, an environment monitoring system, for example environment monitoring system 300 of FIGURE 3, may evaluate sound environment around the device and determine that the sound environment is too quiet to be near a user. In this situation, the environment monitoring system may determine that the environment is not favorable to a user perceiving an alert. Therefore, it may be desired to alert the user when noise around the device increases. In this exemplary embodiment, the device may alert at the time of the event, provide some other form of alert in addition to or in place of the audio alert, or may not alert at the time of the event.

In still another exemplary embodiment, a user may be performing an activity where it is undesirable to perceive an alert, such as driving a car, operating machinery, and/or the like. In such an example, the activity of the user makes it undesirable for the alert to be perceived. In this exemplary embodiment, an environment monitoring system, for example environment monitoring system 300 of FIGURE 3, may evaluate sound characteristics, location information, movement information, and/or the like, around a device, for example, mobile terminal 10 of FIGURE 1, and determine that the activity around the device is inappropriate to be favorable to a user desiring an alert. Therefore, an alert may be suppressed until the user discontinues such an activity. Then, the alert may be performed.

For the sake of simplicity, lack of environmental favorableness for the perception of an alert may be referred to as environmental unfavorableness for an alert. This environmental unfavorableness may be based, at least in part, on factors such as sound environment around the device, location of the device, motion of the device, proximity of the user to the device, visual environment around the device, and/or the like. It should be understood that environmental unfavorableness may comprise multiple elements. Furthermore, environmental unfavorableness may comprise information related to operations performed on environmental information to provide a more concise representation of environmental favorableness for perception of an alert. For example, a high value for environmental unfavorableness may relate to the presence of high amplitude sound levels, indicating that sound environment around the device is not favorable to perception of an audio alert. In another example, a high value for environmental unfavorableness may relate to very low sound levels indicating lack of user proximity. In yet another example, a high value for environmental unfavorableness may relate to very low sound levels and unfavorable user proximity information indicating lack of user proximity.

In evaluating environmental unfavorableness, an environmental unfavorableness threshold may be utilized to evaluate whether the environmental unfavorableness may affect device, for example, mobile terminal 10 of FIGURE 1, behavior. In an exemplary embodiment, environmental unfavorableness threshold may comprise different thresholds relating to one or more environmental factors and various evaluation criteria. For example, an environmental unfavorableness threshold may comprise a threshold related to high sound levels and a different threshold related to motion to evaluate environmental favorability for an alert to be perceived. In addition, it should be understood that various thresholds may be applied for similar environmental factors depending on various scenarios. For example, an environmental unfavorableness threshold may be utilized when evaluating whether a favorable environment has become unfavorable to an alert being perceived. In the same example, another environmental unfavorableness threshold may be utilized when evaluating whether an unfavorable environment has become favorable to an alert being perceived.

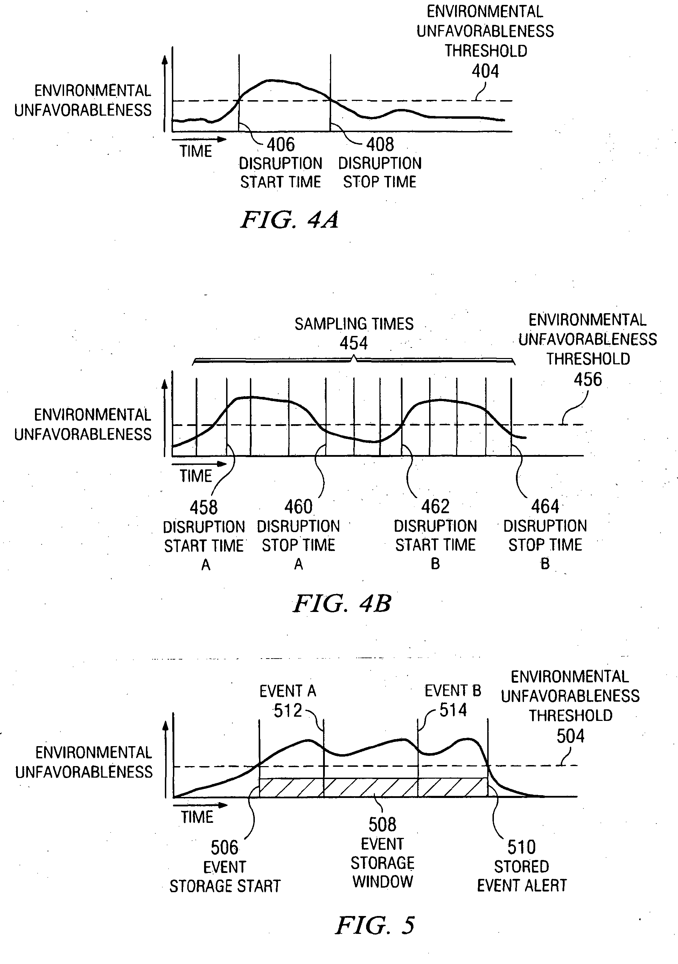

FIGURE 4A is a timing diagram for continuous environment monitoring according to an exemplary embodiment of the present invention and FIGURE 4B is a timing diagram for discontinuous environment monitoring according to an exemplary embodiment of the present invention. It should be understood, however, that the environment monitoring of FIGURE 4A and/or FIGURE 4B as illustrated and hereinafter described is merely illustrative of environment monitoring which may be employed to evaluate environmental conditions, and therefore, should not be taken to limit the scope of the present invention.

FIGURE 4A illustrates a varying environmental unfavorableness over time in relation to an environmental unfavorableness threshold 404. In an exemplary embodiment, environmental unfavorableness may be continuously monitored. A disruption start time 406 relates to the time when the environmental unfavorableness becomes outside the environmental unfavorableness threshold 404. A disruption stop time 408 relates to the time when the environmental unfavorableness becomes within the environmental unfavorableness threshold 404.

FIGURE 4B illustrates an exemplary embodiment where environmental monitoring is performed discontinuously by using a sampling method. This sampling method may comprise one or more sampling times 454, which may occur at various times during operation of a device, for example, mobile terminal 10 of FIGURE 1,. It should be understood that there may be various strategies for determining time intervals between samples. For example, there may be a fixed amount of time between each sample. In another example, there may be less time between samples when environmental unfavorableness is near an environmental unfavorableness threshold 456. Disruption start time A 458 relates to the time when the environmental unfavorableness becomes outside the environmental unfavorableness threshold 456. Disruption stop time A 460 relates to the time when the environmental unfavorableness becomes within the environmental unfavorableness threshold 456. Disruption start time B 462 relates to the time when the environmental unfavorableness becomes outside the environmental unfavorableness threshold 456. Disruption stop time B 464 relates to the time when the environmental unfavorableness becomes within the environmental unfavorableness threshold 456.

It can be seen in FIGURE 4B that disruption start time A 458, disruption stop time A 460, and disruption stop time B 464 are represented later than the times when environmental unfavorableness crosses the environmental unfavorableness threshold 456. Such late determinations may be related to the discontinuous nature of the sampling method.

In an exemplary embodiment, events may be stored during times of environmental unfavorableness so that a user may be alerted at a later time. This later time may be, for example, when a time of environmental favorableness is entered, a time after environment unfavorableness is entered, etc. In an exemplary embodiment, an event storage window may refer to a time period between starting event storage and generating an alert of at least one stored event. However, it should be understood that events may continue to be stored after the alert of at least one stored event. There are various methods which may determine a time for starting and stopping of an event storage mode, for example, environmental unfavorableness becoming outside an environmental unfavorableness threshold, a missed alert when environmental unfavorableness is outside an environmental unfavorableness threshold, environmental unfavorableness becoming within an environmental unfavorableness threshold, a handled alert, and/or the like. A missed alert may comprise an alert for a phone call event where the user does not answer the call, an alert for a phone call event where the user does not decline the call or answer the call, a message alert where the message is not read within a certain amount of time, and/or the like. Handling of an alert may comprise a user answering an alert for a phone call, a user declining an alert for a phone call, a user reading a message and/or the like.

FIGURE 5 is a timing diagram of an event storage mode according to an exemplary embodiment of the present invention. It should be understood, however, that the event storage mode of FIGURE 5 as illustrated and hereinafter described is merely illustrative of event storage mode which may be employed, and therefore, should not be taken to limit the scope of the present invention. In an exemplary embodiment, event storage relates to storage of any information related to an event. This information may comprise alert information, event type information, metadata information, and/or the like.

In an exemplary embodiment, an event storage start 506 relates to an environmental unfavorableness becoming outside an environmental unfavorableness threshold 504. While the environmental unfavorableness is outside of the environmental unfavorableness threshold, event A 512 and event B 514 occur. In an exemplary embodiment, events occurring after an event storage start 506 are stored. Thus in FIGURE 5, event A 512 and event B 514 which occur after event storage start 506 are stored. After the environmental unfavorableness becomes within the environmental unfavorableness threshold 504 a stored event alert 510 may be generated. The stored event alert may comprise information related to event A 512, event B 514, any previously unhandled event, and/or the like. In an exemplary embodiment, an event storage window 508 relates to the time between event storage start 506 and stored event alert 510.

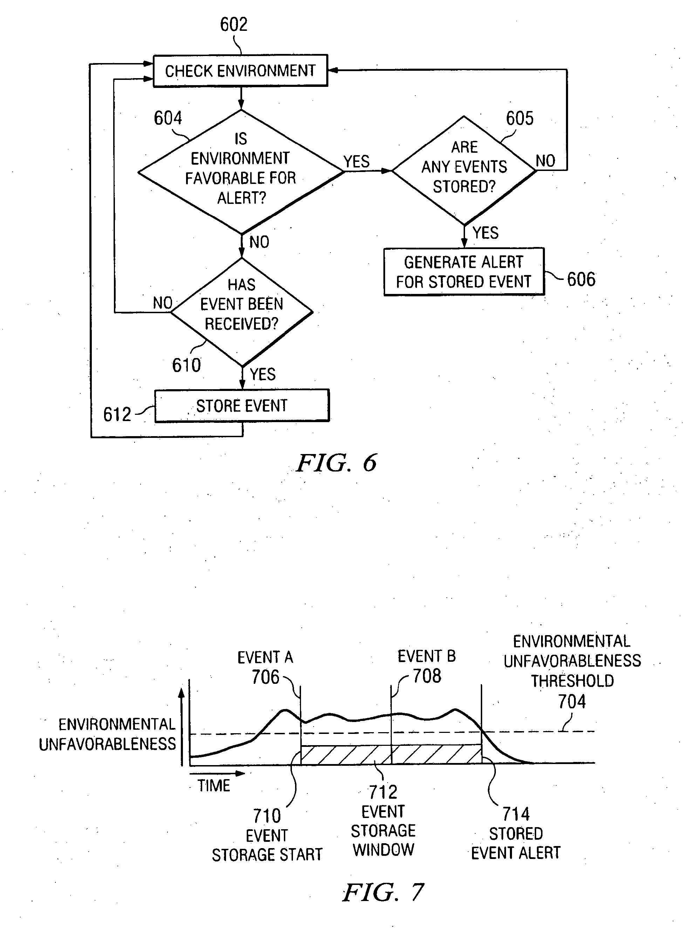

FIGURE 6 is a flow chart of a method for storing events according to an exemplary embodiment of the present invention. It should be understood, however, that the method for storing eventsof FIGURE 6 as illustrated and hereinafter described is merely illustrative of an event storage method which may be employed, and therefore, should not be taken to limit the scope of the present invention.

In an exemplary embodiment, at block 602, the environment around a device, for example, mobile terminal 10 of FIGURE 1, is checked or monitored. The check may comprise evaluating information from one or more environment monitoring systems, for example environment monitoring system 300 of FIGURE 3. It should be understood that monitoring the environment at block 602 may comprise: a discrete operation, a set of operations, a notification from another system, and/or the like. The checking or monitoring may comprise continuous monitoring such as illustrated in FIGURE 4A and/or discontinuous monitoring as illustrated in FIGURE 4B. In an exemplary embodiment, this check may comprise relating environmental information to one or more environmental unfavorableness thresholds.

At block 604, a determination is made as to whether the environment is favorable for an alert. If the environment is favorable for alert, then at block 605, it is verified whether there are any stored events. If, at block 605, it is determined that there are stored events, then at block 606, an alert may be generated for any stored event. If, at block 605, it is determined that there are no stored events, the method starting at block 602 is entered.

If, at block 604, it is determined that the environment is not favorable for alert, at block 610, a determination is made as to whether an event has been received is performed. This determination may comprise an active check, a notification, and/or the like. For example, in an exemplary embodiment, a telephony module may send a notification which relates to occurrence of an event such as a phone call. In another example, determination of an event occurrence may be performed by querying a telephony module about occurrence of an event, such as a phone call.

In an exemplary embodiment, if at block 610 it is determined that an event has not been received, the method starting at block 602 is entered. In an exemplary embodiment, if at block 610 it is determined that an event has been received, then at block 612 the event is stored. In an exemplary embodiment, the event stored at block 612 is an event that occurred during or after the environment became unfavorable, but before the environment became favorable. It should be understood that an alert for an event may be generated in the same circumstance as when it is stored. For example, if a system has determined that an environment is unfavorable for an alert at block 604, when processing a phone call event, for example at block 204 of FIGURE 2, an alert for the phone call event may be generated and the phone call event may be stored. In addition, it should be understood that a variety of one or more data structures may be used to store events. For example, an event storage structure may comprise at least in part: a tree, linked list, database, and/or the like.

FIGURE 7 is a timing diagram of an event storage mode related to receiving an event according to an exemplary embodiment of the present invention. It should be understood, however, that the event storage mode of FIGURE 7 as illustrated and hereinafter described is merely illustrative of an event storage mode which may be employed, and therefore, should not be taken to limit the scope of the present invention.

In an exemplary embodiment, an event storage window 712 relates to the time between an event storage start 710 and a stored event alert 714. In an exemplary embodiment, an event storage start 710 relates to an event A 706 occurring when environmental unfavorableness is outside an environmental unfavorableness threshold 704. Then event B 708 occurs. A stored event alert 714 may be generated in relation to the environmental unfavorableness becoming within the environmental unfavorableness threshold 704. In an exemplary embodiment, the stored event alert may comprise information related to event A 706, event B 708, any previously unhandled events, and/or the like. It should be understood that the determination of the environmental unfavorableness being outside the environmental unfavorableness threshold may take place before an event, after an event, during the processing of an event, and/or the like. It can be seen in FIGURE 7 that the event storage start 710 coincides with event A 706, while in FIGURE 5, the event storage start 506 coincides with the time when environmental unfavorableness becomes outside the environmental unfavorableness threshold 504.

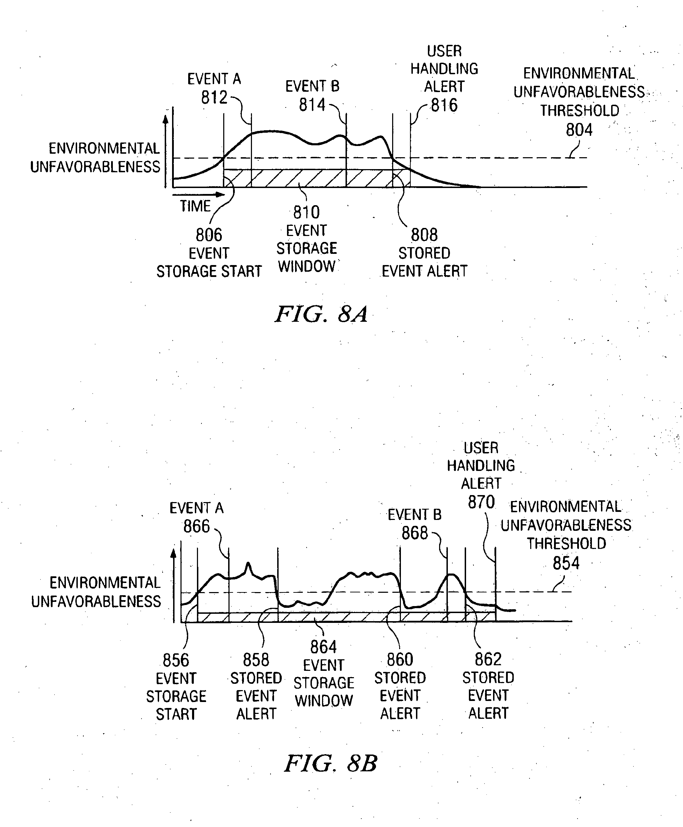

FIGURE 8A is a timing diagram of an event storage mode related to a user handling an alert according to an exemplary embodiment of the present invention. It should be understood, however, that the event storage mode of FIGURE 8A as illustrated and hereinafter described is merely illustrative of an event storage mode which may be employed, and therefore, should not be taken to limit the scope of the present invention.

In an exemplary embodiment, an event storage start 806 relates to an environmental unfavorableness becoming outside an environmental unfavorableness threshold 804. Then event A 812 occurs and event B 814 occurs. A stored event alert 808 may be generated in relation to an environmental factor, for example, the environmental unfavorableness becoming within the environmental unfavorableness threshold 804. In an exemplary embodiment, the stored event alert may comprise information related to event A 812, event B 814, any previously unhandled events, and/or the like. In an exemplary embodiment, after the stored event alert 808, the user handles the alert 816. In an exemplary embodiment, an event storage window 810 relates to the time between event storage start 806 and a user handling the alert 816. Handling of an alert may comprise a user answering an alert for a phone call, a user declining an alert for a phone call, a user reading a message and/or the like.

FIGURE 8B is a timing diagram illustrating operation of an event storage mode related to more than one period of environmental unfavorableness according to an exemplary embodiment of the present invention. It should be understood, however, that the event storage mode of FIGURE 8B as illustrated and hereinafter described is merely illustrative of an event storage mode which may be employed, and therefore, should not be taken to limit the scope of the present invention.

In an exemplary embodiment, an event storage start 856 relates to an environmental unfavorableness becoming outside an environmental unfavorableness threshold 854. Event A 866 occurs after event storage start 856. A stored event alert 858 may be generated in relation to the environmental unfavorableness becoming within the environmental unfavorableness threshold 854. In an exemplary embodiment, the stored event alert may comprise information related to event A 866, any previously unhandled events, and/or the like. After the environmental unfavorableness again becomes outside the environmental unfavorableness threshold 854, a stored event alert 860 may be generated in relation to the environmental unfavorableness again becoming within the environmental unfavorableness threshold 854. The stored event alert may comprise information related to event A 866, any previously unhandled events, and/or the like. After the environmental unfavorableness again becomes outside the environmental unfavorableness threshold 854, event B 868 occurs. A stored event alert 862 may be generated in relation to the environmental unfavorableness again becoming within the environmental unfavorableness threshold 854. In an exemplary embodiment, the stored event alert may comprise information related to event A 866, event B 868, any previously unhandled events, and/or the like. In an exemplary embodiment, after the stored event alert 808, the user handles the alert 816. In the example of Figure 8B, an event storage window 864 relates to the time between event storage start 856 and a user handling the alert 870. It can be seen that the event storage window 864 may relate to multiple events occurring across multiple time periods where environmental unfavorableness is outside the environmental unfavorableness threshold 854.

It should be understood that in cases where environmental unfavorableness is determined and/or utilized, if desired, environmental favorableness may be determined and/or utilized. It should be further understood that in cases where environmental favorableness is determined and/or utilized, if desired, environmental unfavorableness may be determined and/or utilized. It should also be understood that information containing ratings of environmental favorableness and/or environmental unfavorableness may be at least a partial basis for other values related to environmental favorableness and/or environmental unfavorableness.

It should be further understood that there may be various methods of utilizing environmental favorableness, environmental unfavorableness, environmental favorableness threshold, environmental unfavorableness threshold, etc. to benefit from the present invention. For example, an environmental unfavorableness may be determined to be within an environmental unfavorableness threshold if the environmental unfavorableness is less than an environmental unfavorableness threshold. In another example, an environmental unfavorableness may be determined to be outside an environmental unfavorableness threshold if the environmental unfavorableness is less than an environmental unfavorableness threshold. In this manner, there are no limitations on the operations used to evaluate environmental favorableness, environmental unfavorableness, environmental favorableness threshold, environmental unfavorableness threshold, etc.

Embodiments of the present invention may be implemented in software, hardware, application logic or a combination of software, hardware and/or application logic. The software, application logic and/or hardware may reside on a single or a plurality of devices. If desired, part of the software, application logic and/or hardware may reside on a device, part of the software, application logic and/or hardware may reside on another part of the device, and part of the software, application logic and/or hardware may reside on a different device. The application logic, software or an instruction set is preferably maintained on any one of various conventional computer-readable media. In the context of this document, a "computer-readable medium" may be any media or means that may contain, store, communicate, propagate or transport the instructions for use by or in connection with an instruction execution system, apparatus, or device.

If desired, the different functions discussed herein may be performed in any order and/or concurrently with each other. Furthermore, if desired, one or more of the above-described functions may be optional or may be combined.

Without in any way limiting the scope, interpretation, or application of the claims appearing below, it is possible that a technical advantage of one or more of the exemplary embodiments disclosed herein may be repeating an alert when environmental conditions may have interfered with user perception of the alert. Another possible technical advantage of one or more of the exemplary embodiments disclosed herein may be allowing timing of an alert to be at least partially related to environmental conditions. Another technical advantage of one or more of the exemplary embodiments disclosed herein may be increasing the likelihood that a user will perceive an alert.

It is also noted herein that while the above describes exemplifying embodiments of the invention, these descriptions should not be viewed in a limiting sense. Rather, there are several variations and modifications which may be made without departing from the scope of the present invention as defined in the appended claims.

## Claims

1. A method, comprising:
receiving at least one event (512);
determining that at least one environmental factor related to a device (10) is unfavorable for an alert for the event by way of determining that the environmental factor is outside an environmental unfavorableness threshold (504);
storing the event in response to determination that the environmental factor is unfavorable for an alert;
determining that the environmental factor is favorable for an alert; and
generating an alert for the event in response to determination that the environmental factor is favorable for an alert.

2. The method of claim 1, wherein said environmental factor comprises sound.

3. The method of claim 2, wherein determination that the sound is outside of the environmental unfavorableness threshold (504) comprises determination that the sound environment around the device (10) is too quiet.

4. The method of claim 2, wherein determination that the sound is outside of the environmental unfavorableness threshold (504) comprises determination that the sound environment around the device (10) is too noisy.

5. The method of any of claims 1-4, wherein said environmental factor comprises a location.

6. The method of claim 5, wherein determination that the location is outside of the environmental unfavorableness threshold (504) comprises determination that the location of the device (10) is inappropriate to be favorable to an alert.

7. The method of claim 6, wherein determination that the location of the device (10) is inappropriate to be favorable to the alert comprises determining that the location is at least one of a church or a movie theater.

8. The method of any of claims 1-7, wherein said environmental factor comprises motion.

9. The method of claim 8, wherein determining that the motion is outside an environmental unfavorableness threshold (504) comprises determination that the motion indicates that a user is performing an activity where it is undesirable to perceive an alert.

10. The method of claim 8, wherein determining that the motion is outside an environmental unfavorableness threshold (504) comprises determination that the motion indicates that a user has left the device (10).

11. The method of any of claims 1-10, wherein said alert comprises an audio signal,

12. The method of any of claims 1-11, wherein said alert comprises a visual signal.

13. The method of any of claims 1-12, wherein said alert comprises a tactile signal.

14. The method of any of claims 1 - 13, wherein said event comprises receiving a phone call.

15. The method of any of claims 1 - 14, wherein said event comprises receiving a message.

16. The method of any of claims 1 - 15, wherein said event comprises receiving a voice mail notification.

17. The method of any of claims 1 - 16, wherein determining that at least one environmental factor related to a device (10) is favorable for alert is performed after storing the event (512).

18. The method of any of claims 1 - 17, further comprising suppressing an alert for the event in response to determination that the environmental factor is unfavorable for an alert.

19. The method of any of claims 1 - 18, further comprising comparing said environmental factor to an environmental unfavorableness threshold (504).

20. An apparatus (20, 42), comprising:
a processor (20); and
memory (42) including computer program code, the memory and the computer program code configured to, working with the processor, cause the apparatus to perform the method of any of claims 1-19.

21. A computer program product comprising an executable portion to perform the method of any of claims 1-19.

## Patentansprüche

1. Verfahren, das die folgenden Schritte aufweist:
Empfangen von mindestens einem Ereignis (512);
Feststellen, dass mindestens ein Umgebungsfaktor, der eine Vorrichtung (10) betrifft, für einen Alarm für das Ereignis ungünstig ist, durch Feststellen, dass der Umgebungsfaktor außerhalb eines Umgebungsungünstigkeits-Schwellenwerts (504) liegt;
Speichern des Ereignisses als Reaktion auf das Feststellen, dass der Umgebungsfaktor für einen Alarm ungünstig ist;
Feststellen, dass der Umgebungsfaktor für einen Alarm günstig ist; und
Erzeugen eines Alarms für das Ereignis als Reaktion auf das Feststellen, dass der Umgebungsfaktor für einen Alarm günstig ist.

2. Verfahren nach Anspruch 1, wobei der Umgebungsfaktor Schall aufweist.

3. Verfahren nach Anspruch 2, wobei die Feststellung, dass der Schall außerhalb des Umgebungsungünstigkeits-Schwellenwerts (504) liegt, die Feststellung aufweist, dass die Schallumgebung um die Vorrichtung (10) zu leise ist.

4. Verfahren nach Anspruch 2, wobei die Feststellung, dass der Schall außerhalb des Umgebungsungünstigkeits-Schwellenwerts (504) liegt, die Feststellung aufweist, dass die Schallumgebung um die Vorrichtung (10) zu laut ist.

5. Verfahren nach einem der Ansprüche 1 bis 4, wobei der Umgebungsfaktor einen Standort aufweist.

6. Verfahren nach Anspruch 5, wobei die Feststellung, dass der Standort außerhalb des Umgebungsungünstigkeits-Schwellenwerts (504) liegt, die Feststellung aufweist, dass der Standort der Vorrichtung (10) ungeeignet ist, um für einen Alarm günstig zu sein.

7. Verfahren nach Anspruch 6, wobei die Feststellung, dass der Standort der Vorrichtung (10) ungeeignet ist, um für einen Alarm günstig zu sein, das Feststellen aufweist, dass der Standort eine Kirche und/oder ein Kino ist.

8. Verfahren nach einem der Ansprüche 1 bis 7, wobei der Umgebungsfaktor eine Bewegung aufweist.

9. Verfahren nach Anspruch 8, wobei das Feststellen, dass die Bewegung außerhalb eines Umgebungsungünstigkeits-Schwellenwerts (504) liegt, die Feststellung aufweist, dass die Bewegung anzeigt, dass ein Benutzer eine Aktivität ausführt, bei der es unerwünscht ist, einen Alarm wahrzunehmen.

10. Verfahren nach Anspruch 8, wobei das Feststellen, dass die Bewegung außerhalb eines Umgebungsungünstigkeits-Schwellenwerts (504) liegt, die Feststellung aufweist, dass die Bewegung anzeigt, dass ein Benutzer die Vorrichtung (10) liegen gelassen hat.

11. Verfahren nach einem der Ansprüche 1 bis 10, wobei der Alarm ein Audiosignal aufweist.

12. Verfahren nach einem der Ansprüche 1 bis 11, wobei der Alarm ein visuelles Signal aufweist.

13. Verfahren nach einem der Ansprüche 1 bis 12, wobei der Alarm ein tastbares Signal aufweist.

14. Verfahren nach einem der Ansprüche 1 bis 13, wobei das Ereignis das Empfangen eines Telefonanrufs aufweist.

15. Verfahren nach einem der Ansprüche 1 bis 14, wobei das Ereignis das Empfangen einer Nachricht aufweist.

16. Verfahren nach einem der Ansprüche 1 bis 15, wobei das Ereignis das Empfangen einer Sprachmitteilungs-Benachrichtigung aufweist.

17. Verfahren nach einem der Ansprüche 1 bis 16, wobei das Feststellen, dass mindestens ein Umgebungsfaktor, der eine Vorrichtung (10) betrifft, für einen Alarm günstig ist, nach dem Speichern des Ereignisses (512) durchgeführt wird.

18. Verfahren nach einem der Ansprüche 1 bis 17, das ferner das Unterdrücken eines Alarms für das Ereignis als Reaktion auf die Feststellung aufweist, dass der Umgebungsfaktor für einen Alarm ungünstig ist.

19. Verfahren nach einem der Ansprüche 1 bis 18, das ferner das Vergleichen des Umgebungsfaktors mit einem Umgebungsungünstigkeits-Schwellenwert (504) aufweist.

20. Vorrichtung (20, 42), die Folgendes aufweist:
einen Prozessor (20); und
einen Speicher (42), der einen Computerprogrammcode enthält, wobei der Speicher und der Computerprogrammcode konfiguriert sind, in Zusammenarbeit mit dem Prozessor die Vorrichtung zu veranlassen, das Verfahren nach einem der Ansprüche 1 bis 19 auszuführen.

21. Computerprogrammprodukt, das einen ausführbaren Anteil aufweist, um das Verfahren nach einem der Ansprüche 1 bis 19 auszuführen.

## Revendications

1. Procédé consistant à :
recevoir au moins un événement (512) ;
déterminer qu'au moins un facteur environnemental associé à un dispositif (10) est défavorable pour une alerte concernant l'événement en déterminant que le facteur environnemental est différent d'un seuil de caractère défavorable pour l'environnement (504) ;
stocker l'événement en réponse à la détermination du fait que le facteur environnemental est défavorable pour une alerte ;
déterminer que le facteur environnemental est favorable pour une alerte ; et
générer une alerte concernant l'événement en réponse à la détermination du fait que le facteur environnemental est favorable pour une alerte.

2. Procédé selon la revendication 1, dans lequel ledit facteur environnemental comprend un son.

3. Procédé selon la revendication 2, dans lequel la détermination du fait que le son est différent du seuil de caractère défavorable pour l'environnement (504) comprend la détermination du fait que l'environnement sonore autour du dispositif (10) est trop silencieux.

4. Procédé selon la revendication 2, dans lequel la détermination du fait que le son est différent du seuil de caractère défavorable pour l'environnement (504) comprend la détermination du fait que l'environnement sonore autour du dispositif (10) est trop bruyant.

5. Procédé selon l'une quelconque des revendications 1-4, dans lequel ledit facteur environnemental comprend un lieu.

6. Procédé selon la revendication 5, dans lequel la détermination du fait que le lieu est différent du seuil de caractère défavorable pour l'environnement (504) comprend la détermination du fait que le lieu du dispositif (10) ne convient pas pour être favorable à une alerte.

7. Procédé selon la revendication 6, dans lequel la détermination du fait que le lieu du dispositif (10) ne convient pas pour être favorable à l'alerte consiste à déterminer que le lieu est au moins l'une d'une église ou d'une salle de cinéma.

8. Procédé selon l'une quelconque des revendications 1-7, dans lequel ledit facteur environnemental comprend un mouvement.

9. Procédé selon la revendication 8, dans lequel la détermination du fait que le mouvement est différent d'un seuil de caractère défavorable pour l'environnement (504) comprend la détermination du fait que le mouvement indique qu'un utilisateur effectue une activité pour laquelle il n'est pas souhaitable de percevoir une alerte.

10. Procédé selon la revendication 8, dans lequel la détermination du fait que le mouvement est différent d'un seuil de caractère défavorable pour l'environnement (504) comprend la détermination du fait que le mouvement indique qu'un utilisateur a laissé le dispositif (10).

11. Procédé selon l'une quelconque des revendications 1 - 10, dans lequel ladite alerte comprend un signal audio.

12. Procédé selon l'une quelconque des revendications 1 - 11, dans lequel ladite alerte comprend un signal visuel.

13. Procédé selon l'une quelconque des revendications 1 - 12, dans lequel ladite alerte comprend un signal tactile.

14. Procédé selon l'une quelconque des revendications 1 - 13, dans lequel ledit événement consiste à recevoir un appel téléphonique.

15. Procédé selon l'une quelconque des revendications 1 - 14, dans lequel ledit événement consiste à recevoir un message.

16. Procédé selon l'une quelconque des revendications 1 - 15, dans lequel ledit événement consiste à recevoir une notification de messagerie vocale.

17. Procédé selon l'une quelconque des revendications 1 - 16, dans lequel la détermination du fait qu'au moins un facteur environnemental associé à un dispositif (10) est favorable pour une alerte est effectuée après avoir stocké l'événement (512).

18. Procédé selon l'une quelconque des revendications 1 - 17, consistant en outre à supprimer une alerte concernant l'événement en réponse à la détermination du fait que le facteur environnemental est défavorable pour une alerte.

19. Procédé selon l'une quelconque des revendications 1 - 18, consistant en outre à comparer ledit facteur environnemental à un seuil de caractère défavorable pour l'environnement (504).

20. Appareil (20, 42), comprenant :
un processeur (20) ; et
une mémoire (42) comportant un code de programme informatique, la mémoire et le code de programme informatique étant configurés pour fonctionner avec le processeur, en faisant en sorte que l'appareil mette en oeuvre le procédé selon l'une quelconque des revendications 1 - 19.

21. Produit de programme informatique comprenant une partie exécutable pour mettre en oeuvre le procédé selon l'une quelconque des revendications 1 - 19.
